# NEW EUROPEAN PATENT SPECIFICATION

(11) **EP 2 382 164 B2**
(45) Date of publication and mention of the opposition decision: **04.06.2025**
(45) Mention of the grant of the patent: 03.06.2015
(21) Application number: 09796048.8
(22) Date of filing: 23.12.2009
(51) Int. Cl.: C03C 17/36

(54) **HEAT TREATABLE COATED GLASS PANE**
WÄRMEBEHANDELBARE BESCHICHTETE GLASSCHEIBE
VITRE REVÊTUE THERMOTRAITABLE

(30) Priority: 24.12.2008 GB 0823501
(43) Date of publication of application: 02.11.2011
(73) Proprietor: Pilkington Group Limited, St. Helens Merseyside WA10 3TT (GB)
(72) Inventor: O'BRIEN-O'REILLY, Janet, Merseyside L9 9HZ (GB); HUGHES, Monica, Joscelyn, Merseyside WA10 3DL (GB); LAWTON, Dominic, Michael, Lancashire WN5 8NE (GB); SIDDLE, John, Robert, Merseyside PR9 0HW (GB)
(74) Representative: Marsh, Andrew James
(86) International application number: PCT/GB2009/051764
(87) International publication number: WO 2010/073042

(56) References cited:
- WO-A1-02/48065
- WO-A1-2007/080428
- WO-A1-2007/080428
- WO-A1-2007/101964
- WO-A1-2009/001143
- WO-A2-2006/067102
- WO-A2-2006/067102
- WO-A2-2007/101963
- DE-A1- 102006 014 796
- US-A1- 2005 123 772

## Description

The invention relates to heat treatable coated glass panes with a low-e and/or solar control coating.

Heat treated glass panes which are toughened to impart safety properties and/or are bent are required for a large number of areas of application, for example for architectural or motor vehicle glazings. It is known that for thermally toughening and/or bending glass panes it is necessary to process the glass panes by a heat treatment at temperatures near or above the softening point of the glass used and then either to toughen them by rapid cooling or to bend them with the aid of bending means. The relevant temperature range for standard float glass of the soda lime silica type is typically about 580 - 690 °C, the glass panes being kept in this temperature range for several minutes before initiating the actual toughening and/or bending process.

"Heat treatment", "heat treated" and "heat treatable" in the following description and in the claims refer to thermal bending and/or toughening processes such as mentioned before and to other thermal processes during which a coated glass pane reaches temperatures in the range of about 580 - 690 °C for a period of several minutes, e.g., for up to about 10 minutes. A coated glass pane is deemed to be heat treatable if it survives a heat treatment without significant damage, typical damages caused by heat treatments being high haze values, pinholes or spots.

The invention more specifically concerns low-e and/or solar control coatings comprising at least one silver-based functional layer that is embedded between lower and upper anti-reflection layers, which coatings may comprise further auxiliary layers that protect the functional layer(s), modify the reflection and transmission characteristics of the coatings, etc. Even more specifically the invention concerns coatings that are able to withstand heat treatments without a major change of their optical properties, particularly their reflection colour, as reflected in relatively low ΔE* values.

EP 0 718 250 B1 discloses heat treatable coated glass panes with a low-e and/or solar control coating comprising a lower anti-reflection layer, a silver-based functional layer, a metallic barrier layer and an outer anti-reflection layer, wherein the lower and upper anti-reflection layers each comprise partial layers having diffusion barrier properties and wherein the top partial layer of the lower anti-reflection layer comprises an oxide of Zn. Silicon compounds such as silicon nitride (Si₃N₄) are the most preferred materials for partial layers having diffusion barrier properties. The upper anti-reflection layer may comprise further partial layers of an oxide of Zn arranged below a silicon nitride layer. The metallic barrier layer protects the silver-based functional layer during the deposition of the preceding layers of the coating and during a subsequent heat treatment by capturing oxygen and thereby being partially or fully oxidized. Known coated glass panes provide however of a less than optimum sheet resistance at a given thickness of the silver-based functional layer. Their production, specifically when using metallic barrier layers, is difficult to control, and certain of the known coated glass panes show an unacceptably high damage level and/or an unacceptably low mechanical robustness after a heat treatment.

EP 1 154 963 B1 discloses heat treatable coated glass panes with a low-e and/or solar control coating comprising a lower anti-reflection layer, a silver-based functional layer, a barrier layer and an outer anti-reflection layer, wherein the lower and/or upper anti-reflection layers comprise partial layers of (oxi)nitrides of aluminium and of metal oxides, preferably of mixed oxides of Zn and Al. Barrier layers are provided on the silver-based functional layers which may be either metallic or suboxidic. The coatings are designed such that the light transmittance of a coated glass pane changes by at least 2.5 % and preferably significantly more during a heat treatment. The reflection colour of the coatings exemplified in this prior publication changes massively. EP 1 154 963 B1 does therefore not disclose heat treatable coated glass panes having stable optical properties during a heat treatment. Coated glass panes according to EP 1 154 963 B1 furthermore display relatively high haze values of no less than 0.2 % after a heat treatment. The inventors additionally found that AlN-based coatings sometimes tend to suffer from an insufficient chemical robustness.

EP 1 140 721 B1 discloses a method of sputtering barrier layers of metal-doped metal oxides such as Al-doped ZnO from metal-doped metal oxide targets, which barrier layers are to be arranged on top of the silver-based functional layer of certain low-e and/or solar control coatings. The lower anti-reflection layer of these coatings may comprise a base layer of an oxide of Zn and Sn and a top layer of ZnO, and the upper anti-reflection layer may comprise a layer of an oxide of Zn and Sn. At least some of the coated glass panes disclosed in EP 1 140 721 B1 are believed to be heat treatable and to show only small changes of their optical properties during a heat treatment. However it has been found that coatings of the type disclosed in this prior publication tend to be highly susceptible to visible haze formation during a heat treatment.

EP 1 644 296 A2 discloses heat treatable low-e and/or solar control coatings comprising an upper anti-reflection layer of a nitride such as Si₃N₄ covered by a final oxide layer, and specifically discloses a coating of the layer sequence "glass / Si₃N₄ / ZnO / Ag / opt. metal barrier / ZnO / Si₃N₄ / metal oxide cover layer". Such coatings suffer from an insufficient mechanical robustness.

DE 10 2006 014796 A1 aims at increasing the mechanical robustness of Si₃N₄-based coatings by adding auxiliary layers to such coatings, particularly by adding layers consisting of NiCrOₓ. Such approach however increases the complexity of these coatings by increasing the number of layers. NiCrOₓ layers also tend to decrease the light transmission of the coated glass panes because of their ability to absorb visible light.

Heat treatable low-e and/or solar control coatings with a lower anti-reflection layer comprising an Al (oxi)nitride base layer and a top layer of Al-doped ZnO and with an upper anti-reflection layer comprising an Al-doped ZnO layer and an outermost Al nitride layer are proposed by EP 1 147 066 B1. A further publication to be mentioned is EP 1 529 761 A1.

The inventors of the instant invention found that the parameter "haze" usually referred to when characterising the heat treatability of low-e and/or solar control coatings is often insufficient, as it does not fully reflect all types of defects that may arise during coating, heat treating, processing and/or handling of coated glass panes. They found that several low-e and/or solar control coated glass described as heat treatable did not withstand without visible damage one or the other test simulating ordinary environmental influences during storage, transport and use of the coated glass panes before and after a heat treatment and the mechanical and chemical conditions acting on the coated glass panes during usual handling and processing steps. Certain of the known heat treatable coated glass panes showed significant and clearly noticeable modifications of their optical properties and particularly of their reflection colour during a heat treatment.

The invention primarily aims to provide heat treatable coated glass panes.

A specific aim is to keep the haze value of the heat treatable coated glass pane low, particularly at most about 0.2 %, more preferably at most about 0.1 %, even after a heat treatment.

The invention more particularly aims at providing heat treatable low-e and/or solar control coatings that withstand ordinary environmental influences during storage, transport and use of the coated glass panes both before and after a heat treatment and survive the mechanical and chemical conditions acting on the coated glass panes during usual handling and processing steps without significant visible damage.

It specifically aims at providing coated glass panes that show an extremely low level of visible damage as evaluated according to a number of tests simulating certain use, processing and handling conditions for coated glass panes that are described further below in more detail.

The invention furthermore aims to provide heat treatable coated glass panes that either have a particularly high light transmittance and low emissivity (corresponding to a low sheet resistance) or that show good solar control properties, i.e. have a low solar energy transmittance combined with a sufficiently high light transmittance. The invention specifically aims at achieving a particularly low sheet resistance at a given thickness of the silver-based functional layer, as reflected by high light transmittance to sheet resistance (T_{L} / R_{□}) ratios.

The invention also aims to provide heat treatable coated glass panes, the optical properties of which may remain stable during a heat treatment. Particularly the reflection colour modification caused by a heat treatment should be so small that heat treated and non-heat treated coated glass panes may be glazed adjacent to each other without a reflection colour difference that is significantly larger than unavoidable production tolerances for coated glass panes.

The solution of one or more of the problems mentioned above is the subject of claim 1. Preferred embodiments are set out in claims 2 - 3.

Surprisingly chemically and mechanically robust heat treatable coated glass panes with low-e and/or solar control coatings comprising at least one silver-based functional layer that in certain embodiments undergo only low modifications of their optical properties during a heat treatment - particularly of their reflection colour - can be provided by carefully selecting the layer sequences of both the lower and upper anti-reflection layers and preferably also of the barrier layer(s) of the coatings according to the invention.

According to the invention the lower anti-reflection layer of the heat treatable low-e and/or solar control coating comprises at least three essential partial layers, namely:
- a base layer of a nitride of silicon having a thickness of at least 8 nm on or adjacent to the glass pane, serving as a glass side diffusion barrier;
- a middle layer of an oxide of Zn and Sn, serving to stabilize the coating during a heat treatment by providing a dense and thermally stable layer and contributing to reduce the haze after a heat treatment, and also to reduce the sheet resistance of the coating by improving the quality of the subsequently deposited silver-based functional layer, as compared to certain other known dielectric layers, the middle layer preferably being located directly on the base layer of a nitride of silicon; and
- a top layer of a metal oxide, specifically an oxide of Zn, optionally metal-doped, serving as a growth promoting layer for the silver-based functional layer deposited thereafter.

This at least triple layer lower anti-reflection layer provides a superior quality to the low-e and/or solar control coating as compared to, e.g., known double layer lower anti-reflection layers such as "SiNₓ / ZnO" or "Zn-Sn oxide / ZnO".

Furthermore according to the invention the upper anti-reflection layer comprises a layer of a nitride of aluminium having a thickness of more than 10 nm.

The layer of a nitride of aluminium, which makes up a major part of the upper anti-reflection layer, provides stability and diffusion barrier properties. It is preferably deposited in an essentially oxygen-free atmosphere as an AlN layer. The layer of a nitride of aluminium of the upper anti-reflection layer is preferably in direct contact with the barrier layer as defined herein without any intervening further dielectric layer. With its thickness of more than 10 nm it provides an excellent diffusion barrier function. It may in principle make up the whole upper anti-reflection layer.

However, as layers of a nitride of aluminium are somewhat prone to scratching it is required according to the invention to add a protective layer over and preferably in contact with the layer of a nitride of aluminium, particularly to improve the scratch resistance of the coating. The thickness of such protective layer is at least 2 nm. It should not be thicker than 10 nm, preferably have a thickness of about 3 - 6 nm. It is the outermost layer of the low-e and/or solar control coating.

The material for the protective layer as specified before is an oxide of Zn and Sn that preferably comprises about 10 - 90 wt.% Zn and 90 - 10 wt.% Sn, most preferably 40 - 60 wt.% Zn and 40 - 60 wt.% Sn, preferably about 50 wt.% each of Zn and Sn, all in wt.% of the total metal content.

The lower anti-reflection layer comprises a base layer of a nitride of silicon having a thickness of at least 8 nm to provide good diffusion barrier properties. The term "(oxi)nitride of silicon" encompasses both Si nitride (SiNₓ) and Si oxinitride (SiOₓN_{y}). Si nitride layers are preferably essentially stoichiometric (e.g. Si nitride = Si₃N₄, x = 1.33) but may also be substoichiometric or even super-stoichiometric, as long as the heat treatability of the coating is not negatively affected thereby.

Layers of a nitride of silicon may be sputtered from Si-based targets in a sputtering atmosphere containing nitrogen and argon.

If is within the scope of the invention to use doped or mixed Si targets or to otherwise add metals or semiconductors to the Si component of this layer as long as the essential barrier and protection property of the base layer of the lower anti-reflection layer is not lost. A well known and established dopant for Si targets is Al, other dopants not being excluded. Dopants may be typically present in amounts of up to about 5 - 15 wt.%. Al is usually present in Al-doped Si targets in an amount of about 10 wt.%.

A further dielectric layer may be provided as part of the lower anti-reflection layer, particularly arranged immediately on the glass substrate and below the base layer of a nitride of silicon, e.g. a layer having a high refractive index or providing an additional diffusion barrier function. A dielectric material having a refractive index at 550 nm of at least about 2.2, more preferably of at least about 2.3, is particularly recommended for such purpose. A particularly suitable material for such additional high refracting dielectric layer is an oxide of titanium (TiO₂). It is particularly preferred to use a medium-frequency-sputtered oxide of titanium for such additional dielectric layer, and it is preferred to deposit the titanium oxide layer in a sputtering atmosphere to which no nitrogen is added. Other suitable materials are, e.g., the oxides of Nb, Zr, Hf, and combinations of such materials.

By such additional layer the optical properties of the coating may be further optimised as is well known in the art, i.e., a particularly high light transmittance and low IR transmittance at neutral colours may be achievable. It is however generally preferred to arrange the base layer of a nitride of silicon immediately on and in contact with the glass substrate.

The middle layer of the lower anti-reflection layer of an oxide of Zn and Sn (abbreviation: ZnSnOₓ) preferably comprises about 10 - 90 wt.% Zn and 90 - 10 wt.% Sn, more preferably about 40 - 60 wt.% Zn and about 40 - 60 wt.% Sn, preferably about 50 wt.% each of Zn and Sn, in wt.% of its total metal content.

The thickness of the middle layer of the lower anti-reflection layer, that is preferably arranged in direct contact with the base layer of a nitride of silicon, should be at least about 3 nm to contribute significantly to improving the sheet resistance of the subsequently deposited silver-based functional layer. A required thickness range is 3 - 15 nm, preferably about 8 - 12 nm.

The top layer of the lower anti-reflection layer primarily functions as a growth promoting layer for the subsequently deposited silver-based functional layer. It is required that this layer comprises an oxide of Zn, optionally doped with metals like Al or Sn in an amount of up to about 10 wt.% (wt.% referring to the target metal content). A typical Zn dopant content is about 2 wt.%, Al being actually preferred as such Zn dopant. ZnO and doped (mixed) Zn oxides have proven very effective as a growth promoting layer that assists in achieving a low sheet resistance at a given thickness of the subsequently deposited silver-based functional layer. In both cases it is preferred if the top layer of the lower anti-reflection layer is reactively deposited from a metallic target.

It is within the scope of the invention to insert a very thin primer or adhesion-promoting layer between the top layer of the lower anti-reflection layer and the silver-based functional layer, e.g., to combine the aforementioned ZnO-based growth-promoting layer with a further very thin oxidic layer having a thickness of no more than about 1 nm. The further oxidic layer may preferably be chosen from stoichiometric or substoichiometric ITO, NiCrOₓ or ZrOₓ, stoichiometric or substoichiometric NiCrOₓ being particularly preferred. The oxidic layer shall be essentially stoichiometric if a coating having particularly stable optical properties is aimed at. Such primer layer may furthermore be applied below any additional silver-based functional layer of a coating comprising two or more silver-based functional layers. The overall thicknesses of both the lower and upper anti-reflection layers as well as of any central anti-reflection layer located between two silver-based functional layers are chosen, as is well known in the art, such that they can serve their basic function of anti-reflecting the silver-based functional layer(s) by optical interference and provide the coated glass pane with a pleasing appearance or with a desired colour in reflection or transmission. To achieve the desired anti-reflection property each lower and upper anti-reflection layer will typically have a total geometrical thickness of about 20 - 60 nm, whereas the thickness of any central anti-reflection layer is typically about twice as large.

In these boundaries the thicknesses of the individual partial layers of the lower anti-reflection layer can be varied widely. It is however preferred, if
- the base layer of the lower anti-reflection layer has a thickness of about 12 - 25 nm, more preferably of about 15 - 22 nm;
- the middle layer of the lower anti-reflection layer has a thickness of about 8 - 12 nm; and
- it is required that the top layer of the lower anti-reflection layer has a thickness of 2 - 10 nm.

Any silver-based functional layer may consist essentially of silver without any additive, as is normally the case in the area of low-e and/or solar control coatings. It is, however, within the scope of the invention to modify the properties of the silver-based functional layer(s) by adding doping agents, alloy additives or the like or even add very thin metal or metal compound layers, as long as the properties of the silver-based functional layer(s) necessary for its (their) function as highly light-transmitting and low light-absorbent IR-reflective layer(s) are not substantially impaired thereby.

The thickness of a silver-based functional layer is dominated by its technical purpose. For typical low-e and/or solar control purposes the layer thickness for a single silver-based layer is 8 - 15 nm and more specifically about 9 - 12 nm. With such a layer thickness light transmittance values of above 86 % and a normal emissivity below 0.05 after a heat treatment can be easily achieved for single silver coatings. If better solar control properties are aimed at the thickness of the silver-based functional layer may be adequately increased or several spaced functional layers may be provided.

The barrier layer(s) of the inventive coating may generally comprise a layer of a metal or metal alloy or of certain metal compounds such as their suboxides. The metals Ti, NiCr, Zr and the suboxides TiOₓ, NiCrOₓ, InSnOₓ, ZrOₓ, or combinations thereof, are particularly preferred. Such materials are well known in the art to be able to protect a silver-based functional layer during the subsequent deposition of an anti-reflection layer and during a heat treatment of the coated glass pane.

If however the coated glass pane shall not only be heat treatable but is intended to undergo only a small colour (and light transmittance) modification during a heat treatment, barrier layers comprising essentially fully oxidized, at most slightly substoichiometric metal oxides are preferred, and any metallic or suboxidic barrier layer needs to be kept thin. The use of a metal oxide barrier layer rather than (or in addition to) a metallic or suboxidic barrier layer leads to an extremely high optical stability of the coating during a heat treatment and effectively assists in keeping optical modifications during a heat treatment small. Surprisingly the good barrier and protective properties of the upper and lower anti-reflection layers according to the invention allow to avoid or minimize the use of known oxygen scavenger materials like metals or metal suboxides. While these oxygen scavenger materials usually protect the silver-based functional layer effectively against damage, their oxidization during a heat treatment will lead to a significant increase of the light transmittance and a clearly visible colour modification of the coated glass pane during such heat treatment.

It has been found that a superior protection of the silver-based functional layer during the deposition process and a high optical stability during a heat treatment can be achieved if the barrier layer comprises a layer of a (doped) metal oxide sputtered from a (doped) metal oxide target.

Good results are particularly achieved using the required barrier layer comprising an Al-doped oxide of Zn (ZnO:Al), specifically if sputtered from a conductive ZnO:Al target. ZnO:Al may be deposited fully oxidized or such that it is slightly suboxidic. Surprisingly it has been found that a very low oxygen deficit in the ZnO:Al layer is well-suited, i.e. a deficit that is so low that it does not lead to a noticeable light absorption effect by the barrier layer even for a non-heat treated coated glass pane, e.g. reduces the light transmittance of the coated glass pane via absorption by no more than about 0.2 % (percent points, in absolute values). The use of such a low light-absorbing barrier layer advantageously leads only to a slight light transmittance increase during a heat treatment.

The optional suboxidic barrier layer may comprise an oxide of titanium, preferably an oxide of titanium sputtered from a conductive oxide target. The oxide of titanium may be deposited as a slightly substoichiometric layer.

Another alternative is the use of indium oxide or an oxide of an indium-based alloy like In-Sn oxide (ITO), also optionally deposited slightly substoichiometric, the In or In-based alloy oxides also preferably being sputtered from oxide targets.

In a preferred embodiment of the invention a multiple layer barrier layer is provided which comprises in combination a suboxidic metal oxide barrier layer of, e.g., NiCrOₓ immediately above the silver-based functional layer and a subsequent (metal doped) metal oxide barrier layer, Al-doped ZnO, immediately above the suboxidic metal oxide barrier layer.

The targets of an Al-doped oxide of Zn, of Ti oxide and of In oxide or of an In-based alloy oxide mentioned before may be at least slightly suboxidic to increase their electrical conductivity and to simplify the sputter deposition process for the - optionally slightly suboxidic - Al-doped zinc oxide (ZnOₓ:Al), Ti oxide or In or In-based alloy oxide barrier layers. While sputtering in a coating atmosphere containing a controlled small amount of added oxygen may be appropriate, it is preferred if the coating atmosphere contains only a minimum amount of oxygen. An extremely low oxygen content of the coating atmosphere may be achieved by pre-sputtering the targets to provide clean and well-defined target surfaces before starting the actual deposition process, by pumping for a sufficiently long period to evacuate the sputter chamber to a very low pressure of residual gases and specifically by depositing the layers in a sputtering atmosphere to which only inert gases such as argon have been added.

To provide a sufficient protection for the silver-based functional layer(s) barrier layer(s) if deposited as a metal oxide should have a thickness of at least 1 nm, preferably at least about 2 nm. For Al-doped Zn oxide barrier layers it was found that their thickness should not exceed 5 nm.

If metal or metal suboxide barrier layers are used a thickness of at most 2 nm is required, e.g. a thickness of at least about 0.5 nm and at most 2 nm, at least if a high light transmittance and/or a high optical stability of the coating during a heat treatment are aimed at.

Coated glass panes with a low-e and/or solar control coating according to the invention - if properly designed and comprising a single silver-based functional layer - may achieve a light transmittance T_{L} of at least about 86 % before a heat treatment. The light transmittance after a heat treatment will mostly be somewhat higher than the light transmittance before such heat treatment. Therefore heat treated low-e coated glass panes according to the invention may achieve a light transmittance T_{L} of at least about 87 %, and even of about 89 %. Coated glass panes produced in accordance with certain embodiments of the invention, e.g. wherein metallic or suboxidic layers are avoided or are used at a very low thickness and wherein a single silver-based functional layer is used, may show an increase ΔT_{L} of their light transmittance during a heat treatment of at most about 3 %.

Light transmittance values referred to in the specification and in the claims are generally specified with reference to a coated glass pane comprising a 4 mm thick standard float glass pane having a light transmittance T_{L} of 89 % without a coating.

Coated glass panes according to the invention comprising a single silver-based functional layer may have a normal emissivity of at most about 0.07, more preferably of at most about 0.05 (before a heat treatment), corresponding to a sheet resistance of at most about 6 Ω/□. Due to a heat treatment the emissivity of the inventive coatings is typically reduced by at least about 0.01 or even more, without such reduction having a significant influence on the visual appearance of the coated glass panes. Such heat treated coated glass panes preferably have a normal emissivity of at most about 0.05, preferably at most about 0.04, corresponding to a sheet resistance of below 4 Ω/□. A reduction of the emissivity during a heat treatment reflects a reduction of the correlated sheet resistance of the coating which indicates that the silver-based functional layer survives the heat treatment without major damage. Indeed it is usually found that a heat treatment increases the free electron mobility in silver-based functional layers if they are efficiently protected against heat-caused damage.

Inventive low-e coatings having a single silver-based functional layer may achieve high ratios of visible transmittance to sheet resistance T_{L} [%] / R_{□} [Ω/□] of at least about 20, typically of at least about 22 - 26, after a heat treatment, reflecting the fact that the functional silver-based layers are not only deposited with a high quality but also are effectively protected during a heat treatment by the inventive coating design.

Inventive double or multiple silver coatings may achieve even lower emissivity and sheet resistance values and accordingly even higher T_{L} [%] / R_{□} [Ω/_{□}] ratios.

While a neutral reflection and transmission colour of the coated glass panes is usually aimed at, the colour of the coated glass panes according to the invention may be varied widely by adapting the thicknesses of the individual layers appropriately according to the intended visual appearance of the product.

Coated glass panes according to the invention may be used as such if no heat treatment is required. One major advantage of coated glass panes according to certain embodiments of the invention consists in the fact that due to their thermal stability non-heat treated and heat treated coated glass panes may be used in the same building and glazed adjacent to each other without a major colour difference in reflection.

The colour (and light transmittance) stability of the inventive coated glass panes is reflected by the fact that heat treated coated glass panes according to certain preferred embodiments of the invention - comprising a single silver-based functional layer - display a ΔE* value (with reference to an identical non-heated coated glass pane and as defined herein below) of at most about 2.5 ± 0.3 in reflection (both film and glass side) and in transmission. Specifically the colour stability of certain embodiments of the invention may be extremely high, Δa* and Δb* each not exceeding about ± 1 in transmission and not exceeding about ± 2.5 in reflection or even not exceeding about ± 2 in reflection, which is practically non-noticeable.

The thermal stability of coated glass panes according to the invention is reflected by the fact that the haze value of heat treated coated glass panes does not exceed significantly 0.2 % and particularly remains at or below about 0.1 %. Larger increases in the haze value if detected during a heat treatment would indicate that the coating is beginning to be damaged.

It goes without saying that coated glass panes according to the invention will not necessarily survive without damage more than one heat treatment and that all comparison values before and after heat treatment refer to a comparison between a non-heat treated coated glass pane and a coated glass pane heat treated once. Heat treated coated glass panes may however need to survive subsequent thermal treatments at significantly lower temperatures, such as those applied during heat soak tests (usually applied to artificially age and thereby destroy NiS-containing toughened glass panes) which are typically in the order of 300 °C.

To minimize any light absorption in the coating and to reduce the light transmittance increase during a heat treatment the individual layers of the upper and lower anti-reflection layers are preferably deposited with an essentially stoichiometric composition. If however the optical stability or a high light transmittance is not of primary concern a certain degree of substoichiometry may be acceptable for one or more of the layers of the anti-reflection layers of the inventive coating.

To further optimize the optical properties of the coating the upper and/or lower anti-reflection layers may comprise further partial layers consisting of suitable materials generally known for dielectric layers of low-e and/or solar control coatings, in particular chosen from one or more of the oxides of Sn, Ti, Zn, Nb, Ce, Hf, Ta, Zr, Al and/or Si and/or of (oxi)nitrides of Si and/or Al or combinations thereof, provided however that any (oxi)nitride layer of aluminium located adjacent to the base layer of an nitride layer of silicon shall have a thickness of less than 8 nm. When adding such further partial layers it should however be verified that the heat treatability aimed at herein is not impaired thereby.

It is particularly within the scope of the invention to combine the Al nitride layer of the upper anti-reflection layer with a Si (oxi)nitride layer. By such combination whereby the Al nitride layer is effectively partially replaced by a Si (oxi)nitride layer, productivity may be increased and/or chemical robustness may be further increased. Care should however be taken to maintain the minimum layer thickness for the Al nitride layer in the upper anti-reflection layer as indicated herein. It is preferred in case of such partial replacement that the Al nitride layer is not thinner than the Si (oxi)nitride layer partially replacing it. Such Si (oxi)nitride layer may be arranged above (preferred) or below the Al nitride layer which it partially replaces.

It will be appreciated that any further partial layer may contain additives that modify its properties and/or facilitate its manufacture, e.g. doping agents or reaction products of reactive sputtering gases. In the case of oxide layers nitrogen may be added to the sputtering atmosphere leading to the formation of oxinitrides rather than oxides, in the case of nitride layers oxygen may be added to the sputtering atmosphere, also leading to the formation of oxinitrides rather than nitrides.

In certain cases, e.g., if a particularly low solar energy transmittance is aimed at, it may be desirable for one or both of the anti-reflection layers to comprise additionally one or more thermally stable light and/or solar energy absorbing layer(s). Alternatively or in addition hereto at least one of the barrier layers may be designed as a light and/or solar energy absorbing layer.

To protect such visible light and/or solar energy absorbing layer against undesired oxidization during a heat treatment it is preferred if it is embedded in one of the or between two adjacent Si and Al (oxi)nitride layer(s), preferably in the Al nitride layer of the upper anti-reflection layer of the coating which for such purpose is split into (at least) two partial layers of an nitride of Al. Here advantage is taken of the fact that an nitride of Al provides of good oxygen diffusion barrier properties that lead to an effective protection of the embedded oxidizable layer by the embedding partial layers of Al nitride.

Care must be taken by performing a proper material, structure and thickness selection when adding any such further partial layer to the basic layer sequence of the inventive coating that the properties primarily aimed at, e.g. a high thermal stability, are not significantly impaired thereby.

While the invention is primarily directed to low-e and/or solar control coatings with only one silver-based functional layer it is within the scope of the invention to apply the inventive concept to low-e and/or solar control coatings comprising two or even more silver-based functional layers. By providing more than one silver-based functional layer, all functional layers are spaced by intervening dielectric layers (= "central anti-reflection layers") to form a Fabry-Perot interference filter, whereby the optical properties of the low-e and/or solar control coating may be further optimized for the respective application, as is well known in the art. In these cases preferably each additional central anti-reflection layer located between two silver-based functional layers comprises at least - in sequence from the lower functional layer - a layer of an (oxi)nitride of silicon, a layer of an oxide of Zn and Sn, and a layer of a metal oxide, preferably of a (metal-doped, e.g., Al-doped) zinc oxide.

Below each of the at least two silver-based functional layers of such coatings a growth promoting top layer such as explained herein before shall preferably be arranged. Above each silver-based functional layer a barrier layer such as described herein before shall be arranged.

The invention is not limited to a specific production process for the coating. However, it is particularly preferred if at least one of the layers and most preferably all layers are applied by magnetron cathode sputtering, either in the DC mode, in the medium frequency mode or in any other suitable mode, whereby metallic or semiconducting targets are sputtered reactively or non-reactively in a suitable sputtering atmosphere. Depending on the materials to be sputtered planar or rotating tubular targets may be used.

The coating process is preferably carried out by setting up suitable coating conditions such that any oxygen (or nitrogen) deficit of any oxide (or nitride) layer of the anti-reflection layers of the coating is kept low to achieve a high stability of the light transmittance and colour of the coated glass panes during a heat treatment.

The process parameters for the manufacture of inventive heat treatable coated glass panes and the thicknesses and materials of the individual layers are preferably chosen such that in the case of single silver-based functional layers - at least in those embodiments featuring a particularly high optical stability - during a subsequent heat treatment the surface resistance of the coating decreases and the light transmittance of the coated glass pane does not change by more than about 3 %.

Particularly high quality coatings can be achieved if at least one of the partial layers of the lower anti-reflection layer is medium-frequency sputtered from metal or metal oxide targets. Medium-frequency sputtering is well known in the art of sputter deposition and encompasses AC sputtering of two or more targets at a frequency in the range of about 5 - 200 kHz.

The invention is further explained in the following with the aid of **Examples.**

For all Examples the coatings were deposited on 4 mm thick standard float glass panes with a light transmittance of about 89 % using AC and/or DC magnetron sputtering devices, medium-frequency sputtering being applied where appropriate.

All dielectric layers of an oxide of Zn and Sn (ZnSnOₓ, weight ratio Zn : Sn ≈ 50 : 50) were reactively sputtered from zinc-tin targets in an Ar/O₂ sputter atmosphere.

The ZnO:Al growth promoting top layers of the lower anti-reflection layers were sputtered from Al-doped Zn targets (Al content about 2 wt.%) in an Ar/O₂ sputter atmosphere.

The functional layers that in all Examples consisted of essentially pure silver (Ag) were sputtered from silver targets in an Ar sputter atmosphere without any added oxygen and at a partial pressure of residual oxygen below 10⁻⁵ mbar.

The barrier layers of (slightly substoichiometric, low light absorbing) Al-doped zinc oxide (ZnO:Al) were sputtered from conductive ZnOₓ:Al targets in a pure Ar sputter atmosphere without added oxygen.

The suboxidic NiCrOₓ barrier layers were sputtered from Ni₈₀Cr₂₀ targets in an Ar / O₂ sputter atmosphere.

The layers of aluminium nitride (AlN) were reactively sputtered from Al targets in an Ar/N₂ sputter atmosphere containing only residual oxygen.

The layers of silicon nitride (Si₃N₄) were reactively sputtered from Al-doped Si targets in an Ar/N₂ sputter atmosphere containing only residual oxygen.

Table 1 below shows the power densities per cathode (W per target area) and ratios of working gas to reactive gas as used in Example 1. Similar parameters were applied for the other Examples. All total pressures were in the typical regime for sputtering, i.e. at about 2 - 5 * 10⁻³ mbar.

**Table 1**

| | **Si₃N₄** | **ZnSnOₓ** | **ZnO:Al** | **Ag** | **NiCrOₓ** | **ZnO:Al** | **AlN** | **ZnSnOₓ** |
|---|---|---|---|---|---|---|---|---|
| **Power density [W/cm²]** | 7.3 | 2.5 | 0.43 | 1.8 | 2.1 | 1.3 | 7.9 | 2.5 |
| **Ratios Ar / N₂ or Ar/O₂** | 2 | 1.2 | 1.2 | - | 8 | - | 2.5 | 1.2 |

### Examples 1 - 4

The coatings of Examples 1 and 3 (invention) and of the Comparative Examples 2 and 4 had the layer sequences as shown in Table 2 (all thicknesses in nm), each starting from the glass surface:

**Table 2**

| | **Base layer of lower AR layer** | **Middle layer of lower AR layer** | **Top layer of lower AR layer** | **Functional layer** | **Barrier layer(s)** | **Main layer of upper AR layer** | **Outermost layer of upper AR layer** |
|---|---|---|---|---|---|---|---|
| Ex. 1 | Si₃N₄ 16 | ZnSnOₓ 11 | ZnO:Al 5 | Ag 10 | NiCrOₓ 0.5 / ZnO:Al 3 | AlN 24 | ZnSnOₓ 9 |
| C. Ex 2 | Si₃N₄ 17 | ZnSnOₓ 11 | ZnO:Al 5 | Ag 10 | NiCrOₓ 0.5 / ZnO:Al 3 | AlN 26 | - |
| Ex. 3 | Si₃N₄ 16 | ZnSnOₓ 11 | ZnO:Al 5 | Ag 10 | ZnO:Al 3 | AlN 21 / Si₃N₄ 18 | ZnSnOₓ 4 |
| C.Ex. 4 | Si₃N₄ 18 | ZnSnOₓ 10 | ZnO:Al 5 | Ag 10 | NiCrOₓ 0.5 / ZnO:Al 3 | ZnSnOₓ 10 | Si₃N₄ 31 |

Example 1 represents a first layer sequence according to the invention; Comparative Example 2 represents the coating of Example 1 without a protective ZnSnOₓ layer; in Example 3 the Al nitride layer of the outer anti-reflection layer was partially replaced by a Si nitride layer; in the Comparative Example 4 a typical SiNₓ-based coating stack was realised (based on DE 10 2006 014796 A1, without auxiliary NiCrOₓ layers).

### Heat treatability tests

Immediately after the deposition of the coatings of Examples 1 - 4 the optical and some other properties of the coated glass panes were determined (values "before HT"). The samples were then heat treated at about 650 °C for about 5 minutes. Thereafter the properties referred to above were measured again (values "after HT"). The results are listed in Tables 3 and 4 below.

The values stated for the **light transmittance T_{L}** of the coated glass panes in the Examples 1 - 4 were derived from measurements according to EN 140. The sheet resistance R_{□} was measured using a NAGY SRM-12 non-contact sheet resistance meter.

The **colour characteristics** were measured and reported using the well established CIE LAB L*, a*, b* coordinates (see e.g. [0030] and [0031] in WO 2004-063 111 A1). ΔE* = ((Δa*)² + (Δb*)² + (ΔL*)²)^{1/2}, wherein ΔL*, Δa* and Δb* are the differences of the colour values L*, a*, b* of the coated glass pane each before and after a heat treatment. ΔE* values of less than 3 represent a low and practically non-noticeable colour modification caused by the heat treatment.

The **haze values** designate the percentage of transmitted light which in passing through the coated glass pane deviates from the incident beam direction by forward scattering (measured in accordance with ASTM D 1003-61). A haze value which remains low during a heat treatment is a good basic indicator for heat treatability, even if not totally sufficient (see below).

In addition to the standardised haze values given in Table 3 below a **subjective visible haze scoring** system is applied. The quality assessment system described hereinafter was found to be needed to distinguish better the visual quality of coatings under bright light conditions, properties that are not fully reflected by the standard haze values.

The evaluation system considers both the microscopic light scattering effect of the coating (haze in % in Table 3) and the more macroscopic effect of visible faults in the coating which cause local colour variations where the coating is damaged or imperfect (haze score in Table 3). Macroscopic effects of visible faults in the coating before and after a heat treatment are assessed subjectively by viewing samples under bright light. The evaluation is based upon a perfectness scoring (rating) system using scores between 0 (perfect, no faults) through to 3 (high number of clearly visible faults and/or spots) up to 5 (dense haze, often already visible to the naked eye), rating the visual appearance of the coated glass samples before and after a heat treatment.

The visual evaluation is carried out by using a 2.5 million candle power beam (torch) that is directed at incidence angles between about -90° to about +90° (relative to normal incidence) in two orthogonal planes (i.e. turning the torch first in a horizontal plane and then in a vertical plane) onto a coated glass pane that is arranged in front of a black box. The black box has a sufficiently large size such that several coated glass samples can be evaluated at the same time. The coated glass panes are observed and their visual quality is assessed by varying the angle of incidence as described above, by directing the light beam from the observer through the coated glass panes. The coated glass panes are arranged in front of the black box such that their coating faces the observer. Heat treated coated glass panes with any score ≥ 3 are considered as having failed the subjective test.

**Table 3**

| | **Haze before HT [% / score]** | **Haze after HT [% / score]** | **Sheet resistance R_{□} before HT [Ω/sq.]** | **Sheet resistance R_{□} after HT [Ω/sq.]** | **ΔR_{□} [Ω/sq.]** | **T_{L} before HT [%]** | **T_{L} after HT [%]** | **ΔT_{L} [%]** | **T_{L}** / **R_{□}** |
|---|---|---|---|---|---|---|---|---|---|
| Ex. 1 | 0.14 / 0 | **0.18 / 1** | 5.35 | 3.58 | **1.77** | 85.9 | 88.8 | **2.9** | **24.8** |
| C. Ex. 2 | 0.20 / 0 | **0.12 / 1** | 5.24 | 3.49 | **1.75** | 86.0 | 89.0 | **3** | **25.5** |
| Ex. 3 | 0.19 / 0 | **0.17 / 1** | 5.37 | 4.10 | **1.27** | 83.7 | 86.4 | **2.7** | **21.1** |
| C.Ex. 4 | 0.20 / 0 | **0.20 / 1** | 5.86 | 4.16 | **1.70** | 85.6 | 88.5 | **2.9** | **21.3** |

All coatings of the Examples 1 - 4 performed well in terms of haze (which did not exceed 0.2 %), sheet resistance decrease (down to values of about 3 - 4 Ω/sq., corresponding to normal emissivities of well below about 0.05) and light transmittance increase (ΔT_{L} nor more than 3 %).

All coatings of the Examples also showed a low number of visible faults according to the subjective scoring system (haze score = 0) before the heat treatment. All coatings also showed no substantially increased amount of faults after the heat treatment, a value of 1 still being sufficiently low.

In the following Table 4 the light transmission and reflection properties of the coatings of Examples 1 - 4 are displayed.

**Table 4**

| | **Transm. colour before HT (a* / b*)** | **Transm. colour after HT (a* / b*)** | **AE* Trans** | **Refl. colour film side before HT (a* / b*)** | **Refl. colour film side after HT (a* / b*)** | **AE* Refl. film side** | **Refl. colour glass side before HT (a* / b*)** | **Refl. colour glass side after HT (a* / b*)** | **AE* Refl. glass side** |
|---|---|---|---|---|---|---|---|---|---|
| Ex. 1 | -1.5 / 2.0 | -1.5 / 2.4 | **1.3** | -0.2 / -12.1 | 0.7 / -12.2 | **1.5** | -1.2 / -12 | 0.2 / -12.1 | **1.7** |
| C.Ex. 2 | -2.0 / 0.0 | -3.0 / 0.3 | **2.3** | 5.0 / 1.0 | 7.3 / 0.9 | **2.5** | 5.0 / -4.0 | 6.9 / -2.0 | **2.8** |
| Ex. 3 | -1.2 / 4.1 | -1.5 / 3.7 | **1.3** | -2.6 / -16.5 | -0.5 / -15.8 | **2.3** | -2.7 / -14.3 | -1.4 / -13.7 | **2.2** |
| C.Ex. 4 | -1.9 / 2.0 | -2.2 / 1.8 | **1.3** | 2.2 / -8.9 | 4.4 / -8.0 | **2.5** | 1.1 / -11.2 | 3.4 / -10.0 | **2.7** |

All coatings of the Examples 1 - 4 performed also well in terms of ΔE*, ΔE* being at most about 2.5 in reflection (film side), at most about 2.8 in reflection (glass side) and at most about 2.3 in transmission. It should be noted that the inventive Examples 1 - 3 were not fully optimised for colour stability and that even a higher colour stability would have been achievable by further optimising the layer thicknesses.

### Mechanical and chemical robustness tests

As will be explained hereinafter the coated glass panes of Examples 1 and 3 and Comparative Example 2 not only proved to be heat treatable - as reflected by low haze values and low haze scores after HT - but also survived a number of robustness tests simulating ordinary environmental influences during storage, transport and use and of processing and handling of the coated glass panes. In contrast thereto the coating of the Comparative Example 4 clearly failed in some of the tests for mechanical robustness. The robustness tests comprised a Taber test, a humidity test, an HCl test, an oil rub and a brush test.

A **Taber test** as defined in ASTM D 1044 provides a measure of the relative scratch resistance of coated glass panes. The test consists in placing the coated glass samples on a Taber abrader and to subject them to 10 revolutions with a standard 500 g weight. Then by microscopy, image and data analysis the average area of the non-abraded coating is determined. The harder the coating is the more of the coating remains on the glass.

A **humidity test** is an accelerated test that is carried out in a cabinet simulating the environmental influences the coating is expected to experience during its lifetime. The purpose of this test is to determine the relative durability of the coating when subjected to high temperature and high humidity conditions. The test involves visual analysis (monitor the development of characteristic corrosion spots) of the coated glass panes before and after a period of 30 hours in the test cabinet held at 70 °C and 75 % relative humidity.

The purpose of an **HCl test** is to assess the chemical durability of the coatings. The coated glass panes are submerged in a 0.01M solution of hydrochloric acid at 40 °C for five minutes. The sheet resistance of the coating before and after submerging the sample is determined. The HCl test is regarded as passed if the change in sheet resistance is below 5 %.

An **oil rub test** serves to simulate the influence of cutting oils used for cutting glass panes on the mechanical robustness of a coating. Coated glass panes which do not withstand an oil rub test will be difficult to process and are unsuitable for most practical applications, particularly if the coating fails in the oil rub test before a heat treatment. The coated samples are rubbed using a felt pad with an area of 1.2 * 1.2 cm² soaked in microscope oil of refractive index of 1.515 - 1.517. The samples are subjected to 500 cycles with a 1,000 g load at a speed of 37 cycles per minute. Oil rubbed samples are evaluated using an internal evaluation system on a perfectness scale of 0 (perfect, no damage) to 3 (silver layer completely removed). A score of 1 or less is considered acceptable.

A **brush test** is carried out to assess the mechanical robustness of coatings - by simulating the effect of washing brushes on the coated glass surface. The test uses the following brush equipment:

A pillar drill (e.g. from company Ryobi) is fitted with a cup brush of a Benteler washing machine with 0.5 mm diameter polypropylene bristles fixed in a 15 cm diameter cup. After having wetted the glass surface with a water spray in the area to be brushed the rotating brush is lowered so as to touch the coated glass surface and further lowered by another 2 mm to achieve a rotation with a 2 mm deflection of the bristles. The brush is rotated on the coated glass panes at a speed of 240 rpm for 15 s and thereafter released from the glass surface. The brushed glass surface is dried and the brushing result is finally evaluated by visual inspection. Evaluation is carried out by rating the brush-treated coated glass panes against a set of photographs of different degrees of damage rated between 1 (perfect) and 8 (fully destroyed) using a brush test rating scheme as described below in more detail:
- 0:: coating un-marked,
- 2:: up to 3 rings visible in the brushed area, a ring meaning a scratch equivalent to the width of one bristle of the brush;
- 3:: more than 3 complete rings in the brushed area;
- 5:: several rings in the brushed area, with at least one being > 3 mm wide; no delamination;
- 8:: large number of rings / scratches in the brushed area.

Any delamination of the coating is considered as a fail.

The results of the above mechanical and chemical robustness tests carried out at the coatings of Examples 1 - 4 are summarised in the following Table 5.

**Table 5**

| | **Oil rub before HT** | **Oil rub after HT** | **Brush before HT** | **Taber** | **HCl** | **Humidity** |
|---|---|---|---|---|---|---|
| **Ex. 1** | 0 | 0 | 1 (pass) | - | pass | pass |
| **C.Ex. 2** | 0 | - | 3 (fail) | - | pass | pass |
| **Ex. 3** | 0 | 3 | 1 (pass) | - | pass | - |
| **C.Ex. 4** | 3 | 3 | 3 (fail) | - | pass | pass |

It can be seen that the coatings of Examples 1 and 3 passed both the oil rub test before HT and the brush test, showing good mechanical durability both before and after HT. The coating according to Comparative Example 2 without a top protective ZnSnOₓ layer failed the brush test but still passed the oil rub test before HT. This result indicates that the use of a protective layer (particularly of ZnSnOₓ) may be preferable to achieve the best mechanical coating robustness.

The SiNₓ-based coating according to Comparative Example 4 failed in both mechanical tests.

## Claims

1. Coated glass pane with a low-e and/or solar control coating comprising - in sequence from the glass surface - at least the following layers:
- a lower anti-reflection layer, comprising
∘ a base layer of an (oxi)nitride of silicon having a thickness of at least 8 nm,
∘ a middle layer of an oxide of Zn and Sn,
∘ a top layer of a metal oxide;
- a silver-based functional layer;
- a barrier layer;
- an upper anti-reflection layer comprising a layer of an (oxi)nitride of aluminium having a thickness of more than 10 nm;
wherein the coating is a low-e coating and comprises - in sequence - the following layers:
(glass pane /) base layer of SiNₓ 8 - 25 nm / middle layer of ZnSnOₓ 3 - 15 nm / top layer of ZnO (opt. metal-doped) 2 - 10 nm / opt. primer layer ≤ 1 nm / Ag-based functional layer 8 - 15 nm / opt. metallic or suboxidic barrier layer ≤ 2 nm / barrier layer of ZnO:Al 1 - 5 nm / layer of AlNₓ 15 - 40 nm / protective layer of ZnSnOₓ 2 - 10 nm;
wherein the protective layer is the outermost layer of the low-e coating.

2. Coated glass pane according to claim 1, **characterized in that** the protective layer has a thickness of 3 - 6 nm.

3. Coated glass pane according to any of the foregoing claims, **characterized in that** the base layer of the lower anti-reflection layer has a thickness of 12 - 25 nm, more preferably of 15 - 22 nm.

## Patentansprüche

1. Beschichte Glasscheibe mit einer Niedrigemissions- und/oder Sonnenschutzbeschichtung, die von der Glasoberfläche ausgehend, der Reihe nach zumindest folgende Schichten aufweist:
- eine untere Antireflexionsschicht, die aufweist:
∘ eine untere Schicht aus einem Silicium(oxy)nitrid, die eine Dicke von wenigsten 8 nm aufweist,
∘ eine mittlere Schicht aus einem Oxid von Zn und Sn,
∘ eine obere Schicht aus einem Metalloxid,
- eine Funktionsschicht auf Basis von Silber,
- eine Sperrschicht,
- eine obere Antireflexionsschicht, die eine Schicht aus einem Aluminium(oxy)nitrid mit einer Dicke von mehr als 10 nm aufweist,
wobei die Beschichtung eine Niedrigemissionsbeschichtung ist und der Reihe nach folgende Schichten aufweist:
(Glasscheibe/) 8 bis 25 nm dicke Unterschicht aus SiNₓ / 3 bis 15 nm dicke mittlere Schicht aus ZnSnOₓ / 2 bis 10 nm dicke obere Schicht aus ZnO (ggfs. mit Metall dotiert) / ggfs. Primerschicht ≤ 1 nm / 8 bis 15 nm dicke Funktionsschicht auf Basis von Ag / ggfs. metallische oder Suboxid-Sperrschicht ≤ 2 nm / 1 bis 5 nm dicke Sperrschicht aus ZnO:Al / 15 bis 40 nm dicke Schicht aus AlNₓ / 2 bis 10 nm dicke Schutzschicht aus ZnSnOₓ;
wobei die Schutzschicht die äußerste Schicht der Niedrigemissionsbeschichtung ist.

2. Beschichte Glasscheibe nach Anspruch 1, **dadurch gekennzeichnet, dass** die Schutzschicht eine Dicke von 2 bis 10 nm, vorzugsweise von 3 bis 6 nm aufweist.

3. Beschichte Glasscheibe nach einem der vorhergehenden Ansprüche, **dadurch gekennzeichnet, dass** die Unterschicht der unteren Antireflexionsschicht eine Dicke von 12 bis 25 nm, bevorzugter von 15 bis 22 nm aufweist.

## Revendications

1. Panneau de verre revêtu avec un revêtement à faible e et/ou de contrôle solaire comprenant - successivement à partir de la surface de verre - au moins les couches suivantes :
- une couche inférieure anti-réflexion, comprenant
∘ une couche de base d'un (oxy)nitrure de silicium ayant une épaisseur d'au moins 8 nm,
∘ une couche de milieu d'un oxyde de Zn et de Sn,
∘ une couche de haut d'un oxyde de métal ;
- une couche fonctionnelle à base d'argent ;
- une couche barrière ;
- une couche supérieure anti-réflexion comprenant une couche d'un (oxy)nitrure d'aluminium ayant une épaisseur supérieure à 10 nm ;
dans lequel le revêtement est un revêtement à faible e et comprend - successivement - les couches suivantes :
(panneau de verre/) couche de base de SiNₓ 8 - 25 nm/couche de milieu de ZnSnOₓ 3 - 15 nm/couche de haut de ZnO (éventuellement dopée par un métal) 2 - 10 nm/éventuellement couche de primaire ≤ 1 nm/ couche fonctionnelle à base d'Ag 8 - 15 nm/éventuellement couche barrière métallique ou sous-oxydée ≤ 2 nm/couche barrière de ZnO:Al 1 - 5 nm/ couche d'AlNₓ 15 - 40 nm/couche protectrice de ZnSnOₓ 2 - 10 nm ;
dans lequel la couche protectrice est la couche la plus extérieure du revêtement à faible e.

2. Panneau de verre revêtu selon la revendication 1, **caractérisé en ce que** la couche protectrice présente une épaisseur de 3 - 6 nm.

3. Panneau de verre revêtu selon l'une quelconque des revendications précédentes, **caractérisé en ce que** la couche de base de la couche inférieure anti-réflexion présente une épaisseur de 12 - 25 nm, encore mieux de 15 - 22 nm.
